# EUROPÄISCHE PATENTANMELDUNG

(11) **EP 4 155 053 A1**
(43) Veröffentlichungstag der Anmeldung: **29.03.2023**
(21) Anmeldenummer: 22196401.8
(22) Anmeldetag: 19.09.2022
(51) Int. Cl.: B29C 48/10, B29C 55/28, B29C 48/355

(54) **VORRICHTUNG UND VERFAHREN ZUM ENTLÜFTEN EINER FLACHGELEGTEN SCHLAUCHFOLIE**

(30) Priorität: 22.09.2021 DE 102021124559
(71) Anmelder: HOSOKAWA ALPINE Aktiengesellschaft, 86199 Augsburg (DE)
(72) Erfinder: Finsinger, Florian, 86199 Augsburg (DE); Benedetti, Carlo, 21057 Oligate Olona (IT); Belcastro, Mauro, 22078 Turate (IT)
(74) Vertreter: Charrier Rapp & Liebau

(57) **Zusammenfassung**

Die Erfindung richtet sich auf eine Vorrichtung und einem Verfahren zur Herstellung einer Schlauchfolie (4) im Blasfolienverfahren mit einer Blasfolienanlage (1). Sie umfasst eine Flachlegevorrichtung (7) und eine Abzugsvorrichtung (9) mit Abzugswalzenpaar (8), in der die Schlauchfolie (4) flachlegbar ist und die mindestens einer Vorrichtung (10) zur Entlüftung der zuvor flachgelegten Schlauchfolie (4). Die Vorrichtung zur Entlüftung (10) umfasst eine Verfahrvorrichtung (17) für eine Schneidvorrichtung (19) mit Schneidelementen (22) und ist in Transportrichtung der flachgelegten Schlauchfolie (14), nach dem Abzugswalzenpaar (8) angeordnet ist, sodass die flachgelegte Schlauchfolie (4) durch die Vorrichtung zur Entlüftung (10) einschneidbar und entlüftbar ist.

## Beschreibung

Die Erfindung richtet sich auf eine Vorrichtung und ein Verfahren zur Herstellung einer Schlauchfolie im Blasfolienverfahren, mit einer Blasfolienanlage umfassend eine Flachlegevorrichtung und eine Abzugsvorrichtung mit Abzugswalzenpaar, in der die Schlauchfolie flachlegbar ist, sowie mindestens einer Vorrichtung zur Entlüftung der zuvor flachgelegten Schlauchfolie.

Schlauchfolien werden im Blasverfahren in Blasfolienanlagen hergestellt. Dazu wird Kunststoffgranulat in einem Extruder unter Druck und Temperatur aufgeschmolzen und einem Folienblaskopf zugeführt. Im Folienblaskopf wird die Kunststoffschmelze gleichmäßig über den Umfang verteilt und über eine Ringdüse nach außen gedrückt. Danach wird die entstehende Schlauchfolie in Längsrichtung abgezogen und durch Erhöhung des Innendrucks aufgrund der, in die Folienblase zugeführten Luft, auf den gewünschten Durchmesser in Querrichtung aufgeblasen. Die Schlauchfolie wird mittels Kühlluft aus einem oder mehreren Kühlringen von außen und wahlweise auch von innen abgekühlt. Ein Kalibrierkorb der zwischen Folienblaskopf und Abzugsvorrichtung angeordnet ist, stützt und führt die aufgeblasene Schlauchfolie. Danach wird die Schlauchfolie in einer Flachlegevorrichtung flachgelegt und anschließend in einem reversierenden Wendestangenabzug verlegt und die flachgelegte Folie wahlweise als Schlauchfolie auf einen Wickler oder als Flachfolie auf zwei Wickelstellen aufgewickelt.

Bei Coextrusionsanlagen sind mehrere Extruder an einen Coextrusionsblaskopf angeschlossen, wodurch mehrschichtige Folien hergestellt werden können.

Beim Anfahren einer Blasfolienanlage wird die ringförmig austretende Schmelze manuell langgezogen und dann an ein Anfahrband geknotet. Das Anfahrband wird vorab durch die ganze Blasfolienanlage analog dem Folienbahnlauf bis zum Wickler geführt. Anschließend wird langsam das Band manuell oder durch Unterstützung des Wicklers und evtl. auch weiterer Komponenten (Abzug, Vorabzug) gezogen. Dabei werden kontinuierlich die Anlagenparameter eingestellt. Diese sind unter anderem Abzugsgeschwindigkeit, Ausstoß des Extruders, Kühlung. Ist die Folie komplett durchgeführt, kann sie mit dem Wickler aufgewickelt werden. Nun werden die finalen Produkteinstellungen wie Liegebreite und Foliendicke sowie Rezeptur vorgenommen. Ebenso der gewünschte Gesamtausstoß.

Speziell nach dem Anfahren einer Blasfolienanlage aber auch während des Prozesses befindet sich verfahrensbedingt in der flachgelegten Schlauchfolie oft noch Luft in Form von Luftblasen und/ oder Luftpolster. Diese Lufteinschlüsse sind störend für ein faltenfreies Führen der flachgelegten Schlauchfolienbahn durch die nach der Flachlegevorrichtung angeordnete Wendestangeneinheit und / oder auch weiteren Behandlungsschritten. Luftpolster begünstigen z.B. Faltenbildungen und schädigen somit die Folie. Die Folie verliert an Qualität.

Bisher wurde das Entfernen der Luftpolster aus der flachgelegten Schlauchfolie beim Anfahrvorgang der Blasfolienanlage manuell durchgeführt. Dafür musste der Maschinenbediener auf die Anlagebühne steigen. Durch Schnitte in den flachgelegten Folienschlauch kann die Luft entweichen, damit es während des nachgeschalteten Verfahrensschritte zu keiner Qualitätsminderung der Folie kommt.

Die DE 10 2019 127 454 A1 offenbart ein System zur verbesserten Einführung einer Trennvorrichtung in einen flachgelegten Folienschlauch einer Blasfolienanlage, mit einer Schneidevorrichtung zur Durchtrennung von lediglich einer ersten Schlauchseite des Folienschlauches, insbesondere des noch nicht flachgelegten Folienschlauches. Ferner betrifft die Erfindung eine Blasfolienanlage, sowie ein Verfahren zur Herstellung und Bereitstellung von zumindest zwei Folienbahnen.

Die DE 10 2019 127 455 A1 offenbart ein System mit einer Vorrichtung zum Durchtrennen eines Folienschlauchs. Es ist eine Durchtrenneinheit mit Durchtrennelement vor einer Engstelle vorgesehen, der eine Leiteinheit nachgeschaltet ist. Die Durchtrennelemente werden an den Folienschlauch geführt und führen Schnitte auf einer Seite einer teilweise flachgelegten Schlauchfolie durch. Die Schnitte dienen der Entlüftung der Schlauchfolie.

Nachteilig hierbei ist, dass bei einem Schneiden vor der Abzugswalze die Schlauchkanten u.U. nicht erreicht werden können, da die Folienseiten Abstand zu einander haben. Außerdem werden zwei Durchtrennelemente auf einem Schlitten über die Liegebreite der Folie geführt, was sehr zweitaufwendig ist. Des Weiteren ist der Bereich direkt vor der Abzugswalze verfahrenstechnisch für die ideale Folienführung und Flachlegung mittels Rollen und Leisten sehr wichtig.

Für das weit verbreitete manuelle Schneiden ist zusätzlicher personeller Mehraufwand für den Bediener notwendig und es kommt zu Zeitverzögerungen bis zum Anlegen der Produktionsrolle im nachgeschalteten Wickler.

Der Erfindung liegt die Aufgabe zugrunde, dem Stand der Technik eine Alternative zur Verfügung zu stellen.

Bei Blasfolienanlagen der eingangs beschriebenen Art wird die Aufgabe erfindungsgemäß durch das Kennzeichen des Anspruchs 1 und des Anspruchs 12 gelöst.

Bei einer Blasfolienanlage der eingangs beschriebenen Art wird die Aufgabe erfindungsgemäß dadurch gelöst, dass sie eine Vorrichtung zur Entlüftung mit einer Verfahrvorrichtung für eine Schneidvorrichtung mit Schneidelementen umfasst, welche in Transportrichtung der flachgelegten Schlauchfolie nach dem Abzugswalzenpaar angeordnet ist, sodass die flachgelegte Schlauchfolie durch die Vorrichtung zur Entlüftung einscheidbar und entlüftbar ist.
Das Schneiden der flachgelegten Schlauchfolie erfolgt so direkt nach der Abzugswalze bzw. dem Abzugswalzenpaar. Dieses Schneiden erfolgt vorzugsweise automatisch. Es wird ein zeitgleiches Einschneiden an mehreren Stellen der flachgelegten Schlauchfolienbahn über die gesamte Liegebreite der Schlauchfolienbahn realisiert. Des Weiteren können zeitlich nacheinander in Transportrichtung der Schlauchfolie mehrere Schnittreihen erfolgen. Die Schnitte dienen der Entlüftung der flachgelegten Schlauchfolie. Zusätzlich zum Entlüften direkt beim Schneiden erfolgt ein Entlüften an jeder nachgeordneten Walze oder Rolle in Transportrichtung der Schlauchfolie.

Die in einer Blasfolienanlage hergestellte Schlauchfolie wird in einer Flachlegevorrichtung flachgelegt und durch ein Abzugswalzenpaar eines Abzugs geführt und zu einer Schlauchfolienbahn flachgelegt.

Die Vorrichtung zum Entlüften einer in einer Blasfolienanlage hergestellten und flachgelegten Schlauchfolie umfasst mindestens die Elemente: Verfahrvorrichtung mit Schneidvorrichtung und Schneidvorrichtung mit Schneidelementen.
Optional ergänzt wird sie durch eine Schutzvorrichtung wie eine Schutztür oder eine Abdeckung.

Die Schutzvorrichtung der Verfahrvorrichtung mit Schneidvorrichtung ist beweglich gelagert z.B. über ein Scharnier und wird mit Hilfe eines Aktuators geöffnet und geschlossen. Die Schutzvorrichtung kann als Abdeckung ausgeführt sein und schützt das Bedienpersonal vor dem Eingreifen in die Schneidvorrichtung. Dieser Aktuator wird nachfolgend auch Aktuator 1 genannt.

Die Verfahrvorrichtung umfasst die Schneidvorrichtung, welche verfahrbar im Rahmen des Abzugs mittels Lagerungen beidseitig gelagert ist. Die Schneidvorrichtung ist mittels Hebel mit den Lagerungen verbunden. Die Verfahrvorrichtung der Schneidvorrichtung ist mit mindestens einem Aktuator ausgerüstet.

Die Schneidvorrichtung ist mit der Verfahrvorrichtung mit zwei Aktuatoren in Reihe verbunden. Die Verfahrvorrichtung stützt sich auf der einen Seite an der Schneidvorrichtung ab und an der anderen Seite am Rahmen oder Plattform des Abzugs ab. Ein Aktuator der in Reihe geschalteten Aktuatoren (nachfolgend Aktuator 2 genannt) verfährt die Schneidvorrichtung aus einer Parkvorrichtung im Gestell des Abzugs in eine Grundposition kurz vor der flachgelegten Schlauchfolienbahn, ein weiterer Aktuator (nachfolgend Aktuator 3 genannt) verfährt die Schneidvorrichtung, den Messerbalken, von der Grundposition in die Schlauchfolienbahn, die Schneidposition, sodass die Messer die flachgelegte Schlauchfolienbahn einschneiden. Es werden Schnitte durch beide Lagen der flachgelegten Schlauchfolie durchgeführt. Das Verfahren der Schneidvorrichtung von Grundposition in Schneidposition und zurück kann mehrmals hintereinander durchgeführt werden, um mehrere Schnittreihen hintereinander in Transportrichtung der Folie durchzuführen. Durch die Schnitte wird die Schlauchfolie entlüftet. Zusätzlich wird an jeder der Schneidvorrichtung nachgeschalteten Walze oder Rolle die in der flachgelegten Schlauchfolienbahn befindliche Luft aus der Folienbahn herausgedrückt.

In einer besonderen Ausführung kann das Verfahren von Aktuator 3 auch von Aktuator 2 übernommen werden, wie beispielsweise bei einer Linearführung.

Die Aktuatoren sind mittig versetzt zueinander an der Schneidvorrichtung, dem Messerbalken, und an der Schutzvorrichtung, der Abdeckung angeordnet. Ein Aktuator (Aktuator 1) bewegt die Sicherheitsabdeckung und zwei in Reihe geschaltete Aktuatoren (Aktuator 2 und 3) bewegen den Messerbalken. Dabei hat der Aktuator 2 die Aufgabe den Messerbalken an die flachgelegte Schlauchfolie direkt in Transportrichtung der Folien nach dem Abzugswalzenpaar zu bewegen. Der Aktuator 3 verfährt den Messerbalken in die Folienbahn und schneidet. In einer anderen Ausführungsform können die Aktuatoren auch außen an der Schutzvorrichtung und dem Messerbalken angeordnet sein. Es können auch mehrere beabstandete Aktuatoren über die Breite der Schutzvorrichtung und des Messerbalkens eingesetzt werden.

Als Aktuatoren für die Schutzvorrichtung und die Verfahrvorrichtung kommen pneumatische oder hydraulische Zylinder zum Einsatz oder Motoren. Eine manuelle Betätigung ist auch möglich.

In einer weiteren Variante können Linearführungen mit Aktuatoren eingesetzt werden. Sie können pneumatisch ausgeführt sein, aber auch als Motor mit Riemenantrieb oder Motor mittels Zahnräder. Alternativ kann die Verfahrvorrichtung auch manuell über Hebel betätigt werden.

Die Schneidvorrichtung, ein Messerbalken, weist zueinander gleichmäßig beabstandete Aufnahmen für Schneidelemente z.B. Messer auf. Die Aufnahmen können in Querrichtung zur Transportrichtung der Folie verstellt bzw. eingestellt werden. Die Schneidelemente sind austauschbar in Aufnahmen angeordnet, z. B. mittels Schrauben oder Klemmvorrichtungen. In einer alternativen Ausführungsform können die Messer auch einzeln oder gemeinsam versenkbar ausgeführt sein. Sie können auch fest mit der Schneidvorrichtung verbunden sein.

In einer anderen Ausführungsform sind die Schneidelemente über die Breite der Schneidvorrichtung nicht gleichmäßig beabstandet, sie sind z.B. mittig enger beabstandet als nach außen hin. In einer weiteren Ausführungsform sind die Messer außen enger beabstandet als mittig.

Die Schneidvorrichtung weist mindestens ein Schneidelement auf.

Bei einem Verfahren zur Herstellung einer Schlauchfolie in einer Blasfolienanlage der eingangs beschriebenen Art wird die Aufgabe erfindungsgemäß durch das Einschneiden und Entlüften der flachgelegten Schlauchfolie mittels einer Vorrichtung zum Entlüften nach dem Abziehen durch das Abzugswalzenpaar gelöst.

Die Schlauchfolie wird nach ihrer Herstellung in einer Blasfolienanlage zunächst in einer Flachlegung zu einer Schlauchfolienbahn flachgelegt und durch ein Abzugswalzenpaar geführt. Die Vorrichtung zum Entlüften der flachgelegten Schlauchfolienbahn ist im Abzug idealerweise derart angeordnet, dass ein Schneiden der Folien in Transportrichtung der flachgelegten Schlauchfolienbahn direkt nach dem Abzugswalzenpaar und vor der nachfolgenden Behandlungsvorrichtung oder einer nachfolgenden Walze oder Rolle erfolgt. Soll jetzt die flachgelegte Schlauchfolienbahn eingeschnitten werden, wird zunächst mittels eines Aktuators eine Abdeckung oder Schutzvorrichtung zurückgefahren, die die Verfahrvorrichtung mit Schneidvorrichtung in seiner Parkposition abdeckt. Die Vorrichtung ist in der Plattform und Rahmen des Abzugs angeordnet. Die Schutzvorrichtung stellt eine Sicherheitsvorrichtung dar, die ein ungewolltes Eingreifen in die Schneidvorrichtung, den Messerbalken, verhindert. Sie ist optional.

In einem nächsten Schritt verfährt die Verfahrvorrichtung die Schneidvorrichtung in Richtung flachgelegter Schlauchfolienbahn aus der Parkposition in die Grundposition. Dies erfolgt mit einem weiteren Aktuator. In einem weiteren Schritt wird nun mit einem dritten Aktuator die Schneidvorrichtung mit den Schneidelementen, den Messern, in die flachgelegte Schlauchfolienbahn eingeschwenkt, die Schneidposition, um beide Lagen der flachgelegten Schlauchfolienbahn einzuschneiden. Dieser Schritt kann mehrmals hintereinander erfolgen, indem die Schneidvorrichtung mittels Aktuator 3 mehrmals vor und zurück gefahren wird. Die Messer sind bei einer bevorzugten Ausführungsform austauschbar und gleichmäßig beabstandet auf der Schneidvorrichtung, dem Messerbalken, angeordnet.

Nach dem Einschneiden der Folien kann die eingeschlossene Luft nun durch die Schnitte entweichen, sie wird zusätzlich durch die dem Schneiden in Folientransportrichtung nachgeordneten Walzen oder Rollen herausgedrückt, sodass keine Luft mehr die Qualität der Folie im weiteren Verlauf der Verarbeitung negativ beeinflusst.

Nach dem Schneiden fahren die Aktuatoren 2 und 3 die Schneidvorrichtung wieder in die Parkposition und decken die Schneidvorrichtung gegen Eingreifen durch eine Schutzvorrichtung ab.

Die Baugruppe aus den Aktuatoren 2 und 3 die die Schneidvorrichtung bewegen, stützt sich einmal an der Schneidvorrichtung ab und einmal am Rahmen oder der Plattform des Abzugs.

Die Schneidvorrichtung wird in Transportrichtung direkt nach dem Abzugswalzenpaar angeordnet, da das Abzugswalzenpaar die Luft aus der Folienblase zurückhält. Im Fall, dass dies nicht erfolgreich ist, wird die Schneidvorrichtung nach dem Abzugswalzenpaar und direkt vor der nächsten Walze angeordnet, da dies der Ort ist, an dem sich vermehrt und erstmals Lufteinschlüsse bilden. Hier treten erstmals Lufteinschlüsse wie Luftblasen oder Luftpolster auf. Um ein vollständiges Entfernen der Luft sicher zu erreichen, wird durch die komplette flachgelegte Schlauchfolie geschnitten, d.h. durch beide Lagen. Ziel ist es die Luft möglichst schnell und vollständig zu entfernen, da die eingeschnittene Folie in der Weiterverarbeitung der Folie nicht zu verwenden ist und verworfen wird. Das Einschneiden der Folie wird deshalb insbesondere im Anfahrvorgang oder in Kombination mit einem Wickelwechsel in einem nachgeschalteten Wickler vorgenommen.

Die erfindungsgemäße Vorrichtung weist sowohl Funktionselemente wie auch Sicherheitselemente und Wartungsmöglichkeiten auf. Sicherheitselement ist die Abdeckung der Schneidvorrichtung, die ein Eingreifen in die Schneidelemente verhindert.

Für die Wartung wird zunächst die Schutzvorrichtung nach oben verfahren, danach wird die Schneidvorrichtung mit dem Aktuator 2 in eine Wartungsposition verfahren und die Schutzvorrichtung wieder zurückgeklappt. Die Wartungsposition entspricht der Grundposition. Nun können die Messer gewartet, ausgetauscht oder neu ausgerichtet werden. Nach der Wartung wird die Schutzvorrichtung wieder aufgefahren und die Schneidvorrichtung zurückgefahren und die Schutzvorrichtung geschlossen.

In den Folienlauf nach dem Abzugswalzenpaar können Luftpolstersensoren eingebaut werden, um Lufteinschlüsse in der flachgelegten Folie zu detektieren und dann im Anfahrprozess oder beim Wickelwechsel ein Schneiden bei detektierter Luftblase oder Luftpolster vorzunehmen. Die Luftpolstersensoren werden bevorzugt nach dem Abzugswalzenpaar in Folientransportrichtung aber vor nachgeschalteten Walzen und Rollen angeordnet. Sie werden bevorzugt an kritischen Stellen mit großer Umschlingung wie z.B. Wendestangen oder Umlenkrollen mit einer Umschlingung von beispielsweise größer 120° angeordnet.

Idealerweise erfolgt das Schneiden und Entlüften immer im Anfahrvorgang. Bei einem Wickelwechsel wird das Schneiden vor dem Wickelwechsel erfolgen, so lässt sich die eingeschnittene Folie einfach abtrennen und verwerfen lässt, da sie sich auf den äußersten Lagen des Wickels befindet und einfach und abfallreduziert herausgeschnitten werden kann. Sie ist für eine Weiterverarbeitung nicht zu verwenden.

Alternativ kann die Vorrichtung zum Entlüften auch an beliebige Positionen im weiteren Folienbahnlauf montiert werden: z.B. vor dem Vorabzug

Der Vorabzug ist beispielsweise vor dem Wickler angeordnet und zieht die flachgelegte Folie durch die Blasanlage zum Wickler. Vor dem Vorabzug kann es deshalb auch zu einer weiteren Luftansammlung kommen und einen Einsatz der Vorrichtung erfordern.

Es kann auch eine Kombination von mehreren Vorrichtungen erfolgen. Die Vorrichtung zur Entlüftung ist in Transportrichtung der flachgelegten Schlauchfolie nach dem Abzugswalzenpaar angeordnet, bevorzugt direkt nach dem Abzugswalzenpaar.

Das Verfahren zur Entlüftung einer flachgelegten Schlauchfolie umfasst die Schritte:
1. Öffnen der Schutzvorrichtung mittels Aktuators 1
2. Verfahren der Verfahrvorrichtung mit Schneidvorrichtung aus der Parkposition in die Grundposition kurz vor die flachgelegte Schlauchfolie. Dies erfolgt mit Aktuator 2.
3. Verfahren der Schneidvorrichtung von der Grundposition in die Schneidposition. Dies erfolgt mit Aktuator 3.
4. Einschneiden der flachgelegten Schlauchfolie
5. Entlüften der flachgelegten Schlauchfolie
6. Verfahren der Schneidvorrichtung aus der Schneidposition in die Grundposition. Dies erfolgt mit Aktuator 3
7. Verfahren der Verfahrvorrichtung mit Schneidvorrichtung aus der Grundposition in die Parkposition. Dies erfolgt mit Aktuator 2
8. Schließen der Schutzvorrichtung mittels Aktuators 1

Der Schritt 4 und 5 kann mehrmals hintereinander erfolgen.

Schritt 1 und 5 sind optional, es kann hier auch eine Sicherheitstür Zugang zum Abzug gewähren.

Die Schritte 2 und 3 können alternativ mit einem Aktuator erfolgen

Die Schneidposition ist über einen mechanischen Endanschlag realisiert. Die Endposition kann über einen Näherungsschalter abgefragt werden.

Durch das Einschneiden der Schlauchfolie kann diese an jeder nachfolgenden Walze oder Rolle entlüftet werden.

In der Schneidposition können nun mehrere Schnitte parallel, entsprechend der Anzahl der Schneidelemente, über die Liegebreite der Schlauchfolienbahn durchgeführt werden. Dabei durchschneiden die Messer beide Seiten der flachgelegten Schlauchfolienbahn. Durch vor- und zurückfahren des Aktuators 3 können mehrere Schnittvorgänge nacheinander durchgeführt werden, sodass mehrere Einschnitte in Reihe, d.h. nacheinander in Folientransportrichtung erfolgen.

Ist der Aktuator 3 ausgefahren, so ist die Schneidvorrichtung so weit ausgefahren, dass die Messer in die Folienbahn zwischen Abzugswalze und nächster Walze einschneiden. Je nach Anzahl der Messer erfolgen zeitgleich mehrere parallele Schnitte über die Liegebreite der flachgelegten Schlauchfolie. Die Schnittlänge ist über die Anlagenbedienung einstellbar. Es ist ebenfalls die Anzahl der Schnitte nacheinander in Transportrichtung der flachgelegten Schlauchfolie sowie die Zeit zwischen den Schnitten über die Anlagensteuerung einstellbar. Für weitere Schnitte fährt Aktuator 3 wieder in seine Grundposition. Anschließend wieder in seine Schneidposition, in der wieder zeitgleiche parallele Schnitte in die Folienbahn erfolgen. Die Anzahl der Messer und deren Abstand kann vom Bediener nach Erfahrungswerten eingestellt werden. Die Vorrichtung kann auch manuell angesteuert werden.

Die Vorrichtung kann über die Bedienoberfläche der Blasfolienanlage oder über eine separate Bedieneinheit angefahren werden. Folgende Parameter können eingestellt werden: Schnittlänge, Anzahl der Schnitte in Folientransportrichtung und Zeitpunkt des Schneidens.

Das Schneiden kann ausgeführt werden, wenn alle Sicherheitsbedingungen erfüllt sind z.B. mit Sicherheitsschalter verriegelte Schutztüren. Über einen Bahnrisssensor vor der Abzugswalze oder dem Abzugswalzenpaar kann sichergestellt werden, dass auch eine Folie durch die Anlage gefördert wird. Zusätzlich kann als Bedingung eine Abzugsgeschwindigkeit größer 0m/min gefordert werden.

In der Anlagenvisualisierung kann eine Meldung über das erfolgte Schneiden erfolgen. Weitere Produktionsparameter können eingestellt werden, oder mit der ersten Produktions-Folienrolle begonnen werden.

Für die Wartung der Schneidvorrichtung und der Schneidelemente kann ein Wartungsmodus betrieben werden, er umfasst die Schritte:
Schritt 1: Aktuator 1 öffnet die Schutzvorrichtung
Schritt 2: Aktuator 2 verfährt die Verfahrvorrichtung mit Schneidvorrichtung von der Parkposition in die Grundposition, welche der Grundposition entspricht.
Schritt 3: Aktuator 1 schließt die Schutzvorrichtung
Schritt 4: Arbeiten an den Messern z.B. nach Freigabe zum Öffnen der Sicherheitstüren zum Abzugsrahmen für das Arbeiten im Gefahrenbereich
Schritt 5: Aktuator 1 öffnet die Schutzvorrichtung
Schritt 6: Aktuator 2 verfährt die Verfahrvorrichtung mit Schneidvorrichtung von der Wartungsposition in Parkposition
Schritt 7: Aktuator 1 schließt die Schutzvorrichtung
Schritt 8: Freigabe für Anlagenbedienung

Die Schritte 1, 3, 5, 7 sind optional und können auch über andere bekannte Schutzvorrichtungen gelöst werden.

Der Wartungsmodus kann z.B. direkt am Abzug an der Schneidvorrichtung aktiviert werden. Ist der Wartungsmodus aktiviert sind beispielsweise folgenden Bedienungen unterbunden: Starten der Abzugswalze, Verschwenken der Gegendruckwalze im Abzug, Starten der Reversierung am Abzug oder/und Starten Vorabzug oder Wickler.

Eine solche Vorrichtung zum Entlüften von flachgelegten Schlauchfolien ermöglicht ein automatisches Schneiden der Schlauchfolienbahn mit nachfolgender Entlüftung. Parameter wie Anzahl der Schnitte, Schnittlänge und Zeit zwischen den Schnitten kann angepasst werden. Die Vorrichtung ist von ihrem Bauraum an die Blasfolienanlage angepasst, sodass kein zusätzlicher Bauraum gebraucht wird, und ein Nachrüsten bestehender Anlagen möglich ist.

Die Vorrichtung befindet sich während der Produktion in einer sicheren Parkposition sowie für den Messertausch bzw. Messerpositionierung in einer sicheren Grund- oder Wartungsposition.

Es können alle Sicherheitsanforderungen wie Schutzgitter und Schutztüren implementiert werden.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der - beispielhaft - ein bevorzugtes Ausführungsbeispiel der Erfindung dargestellt ist. In der Zeichnung zeigt:
Figur 1 zeigt eine Blasfolienlage mit Entlüftungsvorrichtung
Figur 2 zeigt eine Ansicht der Vorrichtung zur Entlüftung einer flachgelegten Schlauchfolie
Figur 3 zeigt die Verfahrensschritte der Entlüftung einer flachgelegten Schlauchfolie
Figur 4 zeigt die Verfahrensschritte des Wartungsmodus der Entlüftungsvorrichtung

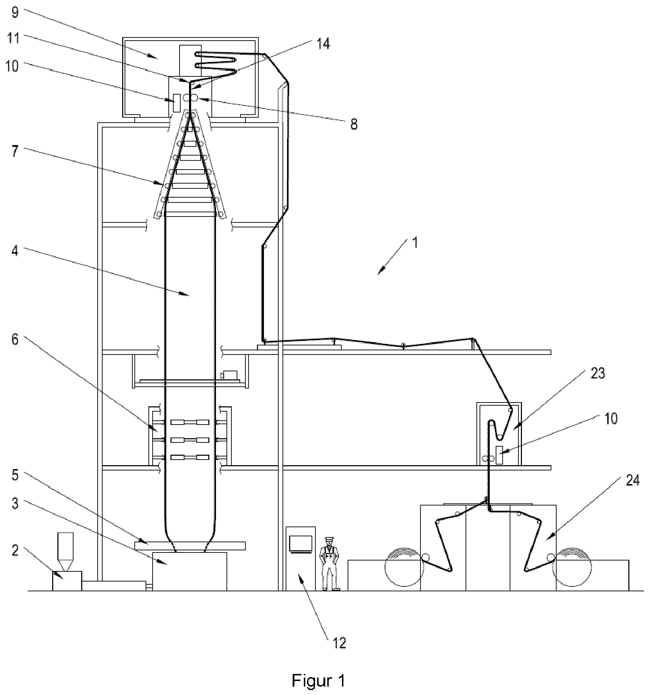

Die Figur 1 zeigt eine Blasfolienanlage (1) mit Wickler (24). Über eine Dosiervorrichtung wird das zu verarbeitende Kunststoffgranulat einem Extruder (2) zugeführt, in diesem aufgeschmolzen, homogenisiert und dem Folienblaskopf (3) zugeführt. Bei der Herstellung von Mehrschichtfolien kommen entsprechend der Schichtzahl mehrere Extruder zum Einsatz. Der Folienblaskopf (3) weist eine Ringdüse auf, aus der die extrudierte Kunststoffmasse austritt. Durch den Folienblaskopf (3) erfolgt die Zuleitung von Kühlluft zum Aufblasen der Schlauchfolie (4). Nach dem Folienblaskopf (3) ist ein Kühlring (5) angeordnet, dieser kühlt die Schlauchfolie (4) von außen. Ein Kalibrierkorb (6) der nach dem Kühlring (5) und vor der Flachlegung (7) angeordnet ist, stützt und führt die aufgeblasene Schlauchfolie (4). Nach dem Erstarren des Kunststoffs wird die Schlauchfolie (4) in der Flachlegevorrichtung (7) flachgelegt und mittels Abzugswalzenpaar (8) des Abzugs, hier ein Wendestangenabzug (9), kontinuierlich abgezogen und anschließend verlegt. Die Folie wird dem Wickler (24) mit Hilfe eines Vorabzugs (23) zugeführt und zu Folienwickeln aufgerollt. Wird die Schlauchfolie vor dem Flachlegen seitlich auf gegenüberliegenden Seiten aufgeschnitten, können die Folienbahnen auch von zwei Wicklern aufgewickelt werden.

Die Vorrichtung zur Entlüftung (10) von in Blasfolienanlagen hergestellten Schlauchfolien ist direkt nach dem Abzugswalzenpaar (8) angeordnet und vor der nachfolgenden Walze (11). Hier ist es eine Umlenkwalze vor dem Wendestangensystem.

Zusätzlich kann eine weitere Vorrichtung zur Entlüftung (10) vor dem Vorabzug (9) vor dem Wickler (24) angeordnet sein.

Über die Anlagensteuerung (12) wird der gesamte Folienblasvorgang geregelt, insbesondere die Antriebe, Kühlluft, die segmentierte Regelzone, die sich im Kühlring (5), im Folienblaskopf (4) oder nachfolgend befindet sowie die Abzugsgeschwindigkeit der Schlauchfolie. Von hier wird auch die Vorrichtung zur Entlüftung (10) der flachgelegten Schlauchfolie (14) gesteuert.

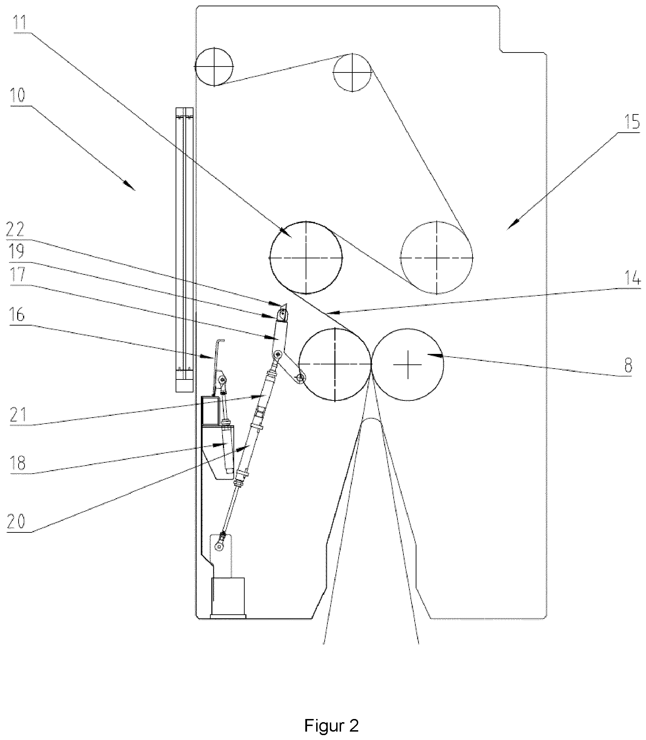

Die Figur 2 zeigt eine Vorrichtung zur Entlüftung (10) von flachgelegten Schlauchfolien (14) in einem Abzug (9). Sie ist im Rahmen des Abzugs (15) angeordnet. Die Abdeckung (16) der Verfahrvorrichtung (17) ist über ein Scharnier an deren Längsseite am Rahmen des Abzugs (15) befestigt. Die Abdeckung (16) wird mit dem Aktuator 1 (18), einem pneumatischen Zylinder, auf und zugefahren. Die Abdeckung (16) deckt die Verfahrvorrichtung (17), hier eine Schwenkvorrichtung (17), mit der Schneidvorrichtung (19) ab.

Die Schneidvorrichtung (19), ein Messerbalken, ist an seiner Stirnseite über Hebel im Rahmen des Abzugs (15) verfahrbar gelagert, der Schwenkvorrichtung. Am Messerbalken (19) sind der Aktuator 2 (20) und der Aktuator 3 (21) in Reihe befestigt. Der zweite Befestigungspunkt der beiden in Reihe geschalteten Aktuatoren (20, 21) ist der Rahmen oder die Plattform des Abzugs. Die Aktuatoren sind mittig in der Vorrichtung angeordnet, wobei der Aktuator 1 (18) zu den Aktuatoren 2 (20) und 3 (21) leicht versetzt nebeneinander angeordnet ist.

Der Messerbalken (19) ist mit mehreren gleichmäßig beabstandeten Schneidelementen (22), Messern, versehen. Die Messer (22) sind mittels Schrauben im Messerbalken (19) befestigt. Das Schneiden erfolgt nach dem Abzugswalzenpaar (8) und vor der nachfolgenden Walze (11) des Abzuges (9). Diese Walze (11) kann Bestandteil eines Abzugs oder eines reversierenden Wendeabzugs aber auch einer Annealingeinheit sein.

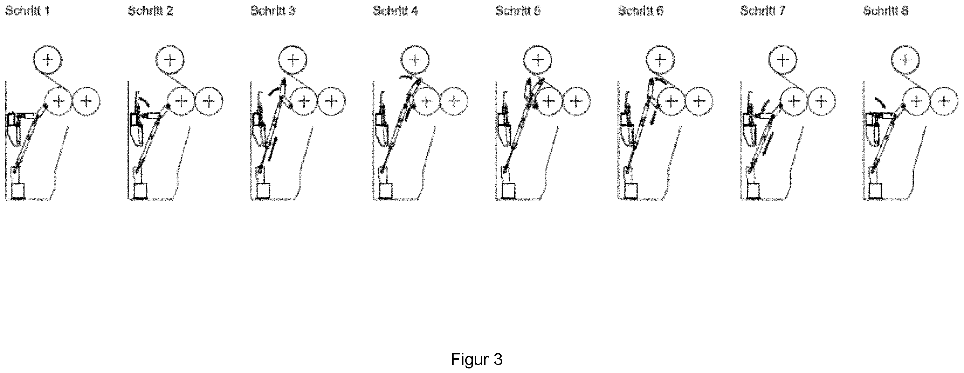

In der Figur 3 sind die Verfahrensschritte für das Schneiden und Entlüften der Folie abgebildet (der Übersichtlichkeit wurden die Bezugszeichen weggelassen, die technischen Merkmale entsprechen denen aus Figur 2):
Schritt 1: Vorrichtung in Parkposition, Abdeckung geschlossen
Schritt 2: Abdeckung wird mit dem Aktuator 1 geöffnet
Schritt 3: Aktuator 2 fährt die Verfahrvorrichtung mit Schneidvorrichtung aus der Parkposition in die Grundposition auf Höhe der zu schneidenden flachgelegten Schlauchfolie
Schritt 4: Aktuator 3 verfährt die Schneidvorrichtung in die Schlauchfolienbahn in die Schneidposition zwischen Abzugswalzenpaar und nachfolgender Walze
Schritt 5: Schlauchfolie wird mit den Messern der Schneidvorrichtung ein oder mehrmals nacheinander eingeschnitten und die Luft kann entweichen.
Schritt 6: Aktuator 3 verfährt die Schneidvorrichtung aus der Schneidposition in die Grundposition
Schritt 7: Aktuator 2 verfährt die Verfahrvorrichtung mit Schneidvorrichtung aus der Grundposition in die Parkposition.
Schritt 8: Aktuator 1 schließt die Abdeckung

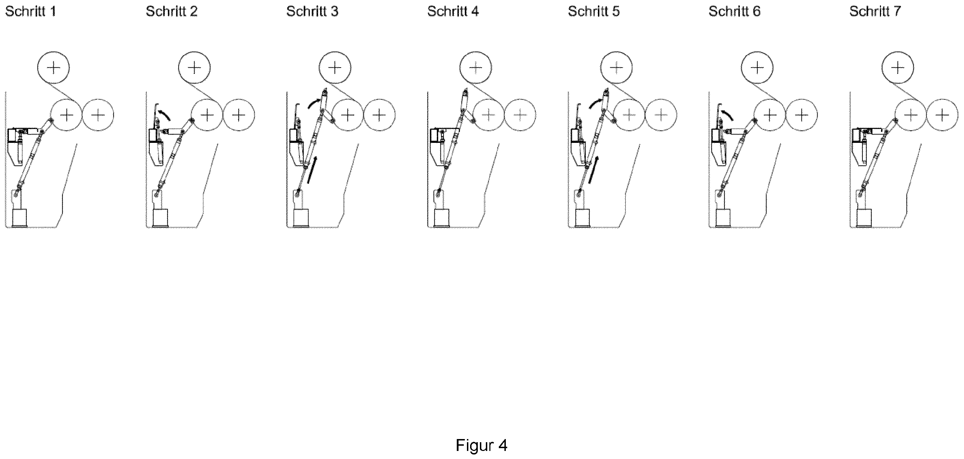

In Figur 4 sind die Schritte des Wartungsvorgangs für die Schneidvorrichtung mit den Schneidelementen dargestellt (der Übersichtlichkeit wurden die Bezugszeichen weggelassen, die technischen Merkmale entsprechen denen aus Figur 2):
Schritt 1: Vorrichtung in Parkposition, Abdeckung geschlossen
Schritt 2: Aktuator 1 öffnet die Abdeckung
Schritt 3: Aktuator 2 fährt die Verfahrvorrichtung mit Schneidvorrichtung aus der Parkposition in die Grundposition = Wartungsposition
Schritt 4: Aktuator 1 schließt die Abdeckung Nun ist die Wartung möglich, Messerbalken in Grundposition = Wartungsposition
Schritt 5: Aktuator 1 öffnet die Abdeckung
Schritt 6: Aktuator 2 fährt die Verfahrvorrichtung mit Schneidvorrichtung aus der Grundposition = Wartungsposition in die Parkposition
Schritt 7: Aktuator 1 schließt die Abdeckung, Vorrichtung in der Parkposition

### Bezugszeichenliste

- 1: Blasfolienanlage
- 2: Extruder
- 3: Folienblaskopf
- 4: Schlauchfolie
- 5: Kühlring
- 6: Kalibrierkorb
- 7: Flachlegung
- 8: Abzugswalzenpaar
- 9: Abzugsvorrichtung, Abzug, Wendeabzug
- 10: Vorrichtung zur Entlüftung
- 11: Walze
- 12: Anlagensteuerung
- 14: flachgelegten Schlauchfolie
- 15: Rahmen/Gestell der Abzugsvorrichtung/des Abzugs
- 16: Abdeckung
- 17: Verfahrvorrichtung, Schwenkvorrichtung
- 18: Aktuator 1
- 19: Schneidvorrichtung, Messerbalken
- 20: Aktuator 2
- 21: Aktuator 3
- 22: Schneidelementen, Messer
- 23: Vorabzug
- 24: Wickler

## Patentansprüche

1. Vorrichtung zur Herstellung einer Schlauchfolie (4) im Blasfolienverfahren, mit einer Blasfolienanlage (1) umfassend eine Flachlegevorrichtung (7) und eine Abzugsvorrichtung (9) mit Abzugswalzenpaar (8), in der die Schlauchfolie (4) flachlegbar ist, sowie mindestens einer Vorrichtung zur Entlüftung (10) der zuvor flachgelegten Schlauchfolie (14),
**dadurch gekennzeichnet, dass**
die Vorrichtung zur Entlüftung (10) eine Verfahrvorrichtung (17) für eine Schneidvorrichtung (19) mit Schneidelementen (22) umfasst,
in Transportrichtung der flachgelegten Schlauchfolie (14) nach dem Abzugswalzenpaar (8) angeordnet ist,
sodass die flachgelegte Schlauchfolie (14) durch die Vorrichtung zur Entlüftung (10) einschneidbar und entlüftbar ist.

2. Vorrichtung nach Anspruch 1, **dadurch gekennzeichnet, dass** die Verfahrvorrichtung (17) mittels mindestens eines Aktuators (20) verfahrbar ist, sodass die Schneidvorrichtung (19) zwischen einer Parkposition im Gestell der Abzugsvorrichtung (15) und einer Grundposition vor der flachgelegten Schlauchfolienbahn (14) verfahrbar ist.

3. Vorrichtung nach Anspruch 1 oder 2, **dadurch gekennzeichnet, dass** die Schneidvorrichtung (19) mittels des mindestens einen Aktuators (20) und/oder mittels mindestens eines weiteren Aktuators (21) verfahrbar ist, sodass die Schneidvorrichtung (19) von der Grundposition in eine Schneidposition, verfahrbar ist, sodass die Schneidelemente (22) der Schneidvorrichtung (19) die flachgelegte Schlauchfolie (14) einschneiden.

4. Vorrichtung nach Anspruch 2 oder 3, **dadurch gekennzeichnet, dass** der Verfahrvorrichtung (17) eine mittels noch eines weiteren Aktuators (18) betätigbare Schutzvorrichtung vorgeordnet ist.

5. Vorrichtung nach einem der Ansprüche 1 bis 4, **dadurch gekennzeichnet, dass** die Aktuatoren (18, 20, 21) pneumatische Zylinder, hydraulische Zylinder, Motoren, in Linearführungen angeordnet oder als Hebel ausgeführt sind.

6. Vorrichtung nach einem der Ansprüche 1 bis 5, **dadurch gekennzeichnet, dass** die Schneidvorrichtung (19) mindestens ein Schneidelement (22) aufweist.

7. Vorrichtung nach einem der vorangegangenen Ansprüchen, **dadurch gekennzeichnet, dass**
die flachgelegten Schlauchfolie (14) mehrmals, quer zur Transportrichtung der Schlauchfolie, durch die Schneidvorrichtung (19) mit Schneidelementen (22) der Vorrichtung zur Entlüftung (10) nebeneinander einschneidbar ist.

8. Vorrichtung nach einem der vorangegangenen Ansprüchen, **dadurch gekennzeichnet, dass**
die flachgelegte Schlauchfolie (14), quer zur Transportrichtung der Schlauchfolie, mehrmals durch die Schneidvorrichtung (19) mit Schneidelementen (22) der Vorrichtung zur Entlüftung (10) nacheinander einschneidbar ist.

9. Vorrichtung nach einem der vorangegangenen Ansprüchen, **dadurch gekennzeichnet, dass**
in Transportrichtung der Schlauchfolienbahn nach dem Abzugswalzenpaar (8) Luftpolstersensoren angeordnet sind.

10. Vorrichtung nach einem der vorangegangenen Ansprüchen, **dadurch gekennzeichnet, dass**
mehrere Vorrichtungen zur Entlüftung (10) nach dem Abzugswalzenpaar (8) angeordnet sind, und/oder dass die Vorrichtung zur Entlüftung (10) in Transportrichtung der flachgelegten Schlauchfolie nach dem Abzugswalzenpaar (8) angeordnet ist, bevorzugt direkt nach dem Abzugswalzenpaar (8).

11. Vorrichtung nach einem der vorangegangenen Ansprüchen, **dadurch gekennzeichnet, dass**
die Schneidparameter: Schnittlänge, Schnittzeitpunkt, Anzahl der nacheinander durchgeführten Schnittvorgänge, Messerabstand und / oder Messeranzahl bei versenkbaren Messern über die Anlagensteuerung (12) der Blasfolienanlage oder eine separate Steuerung einstellbar und steuerbar sind.

12. Verfahren zur Herstellung einer Schlauchfolie (4) im Blasfolienverfahren in einer Blasfolienanlage (1) insbesondere nach den Ansprüchen 1 bis 11 umfassend die folgenden Schritte
- Herstellen einer Schlauchfolie (4)
- Flachlegen der Schlauchfolie (4) in einer Flachlegevorrichtung (7)
- Abziehen der Schlauchfolie (4) in einer Abzugsvorrichtung (9) mit Abzugswalzenpaar (8),
- Einschneiden und Entlüften der flachgelegten Schlauchfolie (14),
**dadurch gekennzeichnet, dass**
- das Einschneiden und Entlüften der flachgelegten Schlauchfolie (14) mittels einer Vorrichtung zur Entlüftung (10) nach dem Abziehen durch das Abzugswalzenpaar (8) erfolgt.

13. Verfahren nach Anspruch 12, **dadurch gekennzeichnet, dass** die flachgelegte Schlauchfolie (14) mehrmals, quer zur Transportrichtung der Schlauchfolie, nebeneinander eingeschnitten wird

14. Verfahren nach Anspruch 12 oder 13, **dadurch gekennzeichnet, dass** die flachgelegten Schlauchfolie (14), quer zur Transportrichtung der Schlauchfolie, einmal oder mehrmals nacheinander eingeschnitten wird.

15. Verfahren nach Anspruch 12, 13 oder 14, **dadurch gekennzeichnet, dass** das Einschneiden und Entlüften die folgenden Schritte umfasst:
- Verfahren der Verfahrvorrichtung (17) mit Schneidvorrichtung (19) aus der Parkposition in die Grundposition vor die flachgelegte Schlauchfolie (14),
- Verfahren der Schneidvorrichtung (19) von der Grundposition in die Schneidposition,
- Einschneiden der flachgelegten Schlauchfolie und (14) Entlüften der flachgelegten Schlauchfolie (14),
- Verfahren der Schneidvorrichtung (19) aus der Schneidposition in die Grundposition,
- Verfahren der Verfahrvorrichtung (17) mit Schneidvorrichtung (19) aus der Grundposition in die Parkposition.

16. Verfahren nach einem der Ansprüche 12 bis 14, **dadurch gekennzeichnet, dass** ein Wartungsvorgang folgende Schritte umfasst:
- Verfahren der Verfahrvorrichtung (17) mit Schneidvorrichtung (19) aus der Parkposition in die Grundposition, welche der Wartungsposition entspricht,
- Wartung der Schneidvorrichtung (19) und der Schneidelemente (17),
- Verfahren der Schneidvorrichtung (19) aus der Grundposition in die Parkposition.
